# EUROPEAN PATENT APPLICATION

(11) **EP 0 857 698 A2**
(43) Date of publication of application: **12.08.1998**
(21) Application number: 98102261.9
(22) Date of filing: 10.02.1998
(51) Int. Cl.: C02F 3/12

(54) **Activated sludge system for the purification of waste water from civil building outlets**

(30) Priority: 11.02.1997 IT MI970098 U
(71) Applicant: I.S.E.A. S.r.l. Societa' Italiana Energia Ambiente, 29100 Piacenza (IT)
(72) Inventor: Bernini, Giuseppe, 29023 Farini D'Olmo, Piacenza (IT)
(74) Representative: Cicogna, Franco

(57) **Abstract**

The present invention relates to an activated sludge system for the purification of waste water from civil building outlets, comprising a holding body communicating with a sewage inlet duct and in which a diffusing pipe is provided for supplying air bubbles.

The system comprises moreover a sedimenting device having a bottom mouth leading to the bottom of the holding body and an outlet duct communicating with the top portion of said sedimenting device and including a chlorinating assembly for chlorinating the outlet fluid.

## Description

### BACKGROUND OF THE INVENTION

The present invention relates to an activated sludge system for the purification of waste water from civil building outlets.

As is known, the waste waters coming from civil building outlets not coupled to the drainage system must be properly purified.

Prior purifying systems, however, do not provide a satisfactory purification of waste water to a level allowing the purified water to be freely sent to a surface water stream, since the polluting levels are frequently greater than the imposed by law polluting levels.

In order to provide a solution to the above problem, very complex and expensive systems have been provided which, moreover, involve great operating and maintenance problems.

### SUMMARY OF THE INVENTION

The aim of the present invention is to overcome the above mentioned drawback, by providing an activated sludge system, specifically designed for purifying waste waters coming from civil building outlets, which system has a very reduced size and can be quickly installed, while providing a very good purification of the sewage, in order to freely drain said sewage into surface water streams.

Within the scope of the above mentioned aim, a main object of the present invention is to provide such a system which can be easily monitored for easily performing a periodic maintenance thereof.

Yet another object of the present invention is to provide such an activated sludge system which can be easily installed in any types of ground, for example a vegetable ground, and which affords the possibility of easily making a top concrete layer on the installation region of the system.

Yet another object of the present invention is to provide such a system which is very reliable and safe in operation.

According to one aspect of the present invention, the above mentioned aim and objects, as well as yet other objects, which will become more apparent hereinafter, are achieved by an activated sludge system, specifically designed for the purification of waste water coming from civil building outlets, characterized in that said system comprises a holding body, communicating with a sewage inlet duct and in which a diffusing pipe is arranged, said diffusing pipe being coupled to a diffuser for supplying air bubbles, a sedimenting device being moreover provided, said sedimenting device having a bottom mouth leading to the bottom of said holding body as well as a draining duct communicating with the top portion of said sedimenting device and being provided with a chlorinating assembly for chlorinating the outlet liquid.

### BRIEF DESCRIPTION OF THE DRAWINGS

Further characteristics and advantages of the invention will become more apparent hereinafter from the following detailed disclosure of an activated sludge system, specifically designed for the purification of waste water coming from a civil building outlet, which is illustrated, by way of an indicative, but not limitative example, in the accompanying drawings, where:

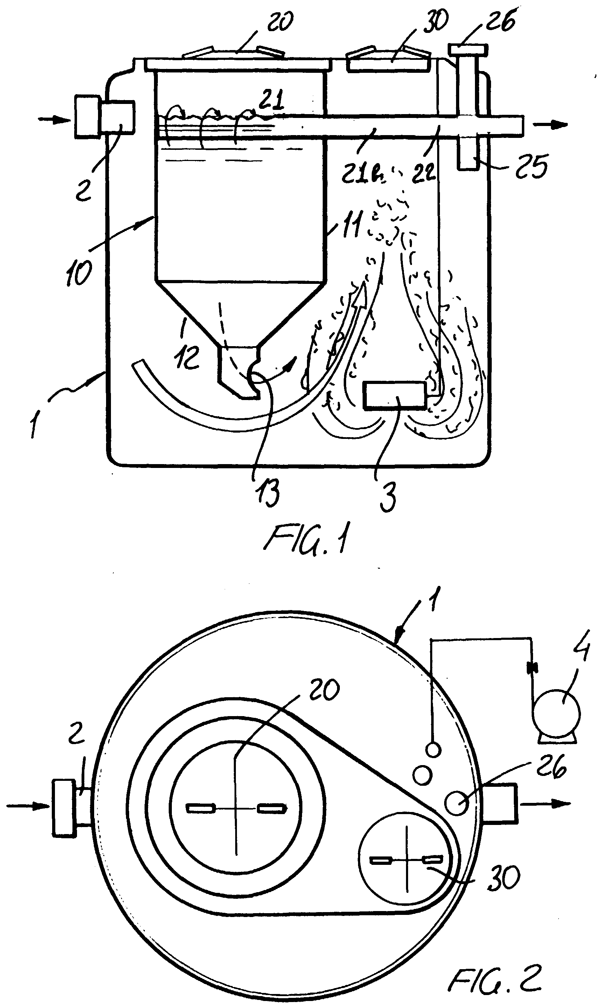

Figure 1 is a cross-sectional view illustrating the system according to the invention; and
Figure 2 is a top plan view of the system according to the invention.

### DESCRIPTION OF THE PREFERRED EMBODIMENT

With reference to the number references of the above mentioned figures, the activated sludge system specifically designed for the purification of waste water coming from civil building outlets comprises a vessel or holding body 1, which is advantageously made of a polyethylene single block, and being coupled to an inlet duct 2 for conveying the sewage coming from building outlets.

Inside the vessel or holding body 1, near the bottom portion thereof, a diffusing pipe 3 is provided, said diffusing pipe being advantageously made of a porous candle, a duct or other element adapted to provide air bubbles of middle-fine size.

The supplying of said bubbles is performed by a blowing compressor 4, arranged outside of said vessel in a dry place, and at a level higher than the sewage outlet level.

The supplying of said middle-fine air bubbles will allows the aerobic microorganisms to carry out a purifying process of the organic material.

Inside the vessel or holding body 1 a sedimenting device, indicated by the reference number 10 is moreover provided, said sedimenting device comprising a cylindric or prismatic vessel 11 ending at the bottom thereof with a hopper portion 12 and being coupled to a bottom mouth 13 leading to the bottom of the vessel 1.

Inside the sedimenting device 10, which is closed at the top thereof by a threaded cover 20, an outlet duct 21 is provided, said outlet duct being of channel configuration and having a toothed contour and a central port 21b coupled to an outwardly directed outlet portion 22, said outlet duct 21 being furthermore provided with a siphon portion 25 operating as a housing for a chlorine pad, provided for chlorinating the oxidized and clarified residues conveyed to the outside.

On the outlet portion 22 a chlorine inlet 26 is moreover arranged.

The system comprises moreover a monitoring cover, indicated by the reference number 30, allowing to access the inside of the system for performing conventional maintenance operations.

From the above it should be apparent that the invention fully achieves the intended aim and objects.

In particular, the fact is to be pointed out that an activated sludge system has been provided which has a very reduced size and allows the solid materials which are present in the stream coming from the oxidizing region to easily sediment, in a quiet region formed in the inside of the system.

The activated sludge, in particular, is recirculated from the sedimenting device by the ascending air flow.

In this connection it should be moreover pointed out that the processed water will exit the sedimenting device through a pipe having a toothed contour in order to properly control the entrainment due to the outlet streams.

The recirculation of the sludge is performed without any recirculating apparatus, but by the simple driving force due to the upwardly directed air streams.

Moreover, the provision of a chlorinating outlet duct will allow to perform a full purifying of the sewage, with a subsequent conveying to a surface water stream.

In practicing the invention, the used materials, provided that they are compatible to the intended application, as well as the contingent size and shapes, can be any, depending on requirements.

## Claims

1. An activated sludge system, specifically designed for the purification of waste water coming from civil building outlets, characterized in that said system comprises a holding body, communicating with a sewage inlet duct and in which a diffusing pipe is arranged, said diffusing pipe being coupled to a diffuser for supplying air bubbles, a sedimenting device being moreover provided, said sedimenting device having a bottom mouth leading to the bottom of said holding body as well as a draining duct communicating with the top portion of said sedimenting device and being provided with a chlorinating assembly for chlorinating the outlet liquid.

2. An activated sludge system, according to the preceding claim, characterized in that said holding body comprises a polyethylene single block.

3. An activated sludge system, according to Claims 1 and 2, characterized in that said sedimenting device comprises a cylindric body closed at the top thereof by a threaded cover which is assembled in order to allow it to be vertically displaced.

4. An activated sludge system, according to one or more of the preceding claims, characterized in that said cylindric vessel or holding body is coupled at the bottom thereof to a hopper portion coupled to the bottom mouth.

5. An activated sludge system, according to one or more of the preceding claims, characterized in that said diffusing pipe is coupled to a porous air diffuser.

6. An activated sludge system, according to one or more of the preceding claims, characterized in that said diffusing pipe is coupled to a compressor, arranged in a dry place, at a level higher than the outlet level of said waste water.

7. An activated sludge system, according to one or more of the preceding claims, characterized in that said chlorinating assembly comprises a siphon provided on the outlet duct and housing a chlorine pad.

8. An activated sludge system, according to one or more of the preceding claims, characterized in that said system comprises moreover a housing coupled to the outlet duct, for engaging therein said chlorine pad.

9. An activated sludge system, according to one or more of the preceding claims, characterized in that said system comprises moreover, on the top portion of said holding body or vessel, a monitoring cover.

10. An activated sludge system, according to one or more of the preceding claims, characterized in that the water processed thereby exit said sedimenting device through a pipe having a toothed contour in order to limit the entrainment due to outlet streams.

11. An activated sludge system, according to one or more of the preceding claims, characterized in that said sludge is recirculated by the upwardly directed air streams.
